# EUROPEAN PATENT APPLICATION

(11) **EP 4 390 334 A1**
(43) Date of publication of application: **26.06.2024**
(21) Application number: 22216551.6
(22) Date of filing: 23.12.2022
(51) Int. Cl.: G01F 1/66, G01F 15/00, G01F 15/14

(54) **COMPACT ULTRASONIC FLOWMETER WITH IMPROVED ANTENNA PERFORMANCE**

(71) Applicant: Kamstrup A/S, 8660 Skanderborg (DK)
(72) Inventor: Azzinnari, Leonardo, DK-8660 Skanderborg (DK); Bahramzy, Pevand, DK-8660 Skanderborg (DK); Laursen, Peter Schmidt, DK-8660 Skanderborg (DK)
(74) Representative: Plougmann Vingtoft a/s

(57) **Abstract**

An ultrasonic flow meter for measuring a flow rate of a fluid. The flow meter has a flow tube (FT), and a flow meter housing (H) associated with the flow tube (FT). A printed circuit board (PB) is arranged in the housing (H) and including a processor for controlling operations of the flow meter, a meter circuit, and a radio circuit for generating a radio signal with data indicative of a measured flow rate of the fluid. A lid (LD) may serve to close off the housing (H). An insert (I) in the housing(H) has a wall (W) and a bottom (B) forming a container (CD) for a desiccant. A front part (FP) serves as a lid for the container (CD) for the desiccant. An antenna element (AE) is mounted on a peripheral part (PP) of the insert (I) and being configured to radiate radio waves in response to the radio signal. The insert (I) has spacing elements (RB) on which the antenna element (AE) is mounted so that at least a minimum distance (D) to an inner part of a wall (W) of the container (CD) for the desiccant is provided, so as to reduce influence of at least one property of the desiccant on an impedance matching between the antenna element (AE) and the radio circuit. Hereby, with a distance (D) of such as 4-6 mm, it has been found to cause antenna performance to be generally independent of the desiccant, e.g. the position of the desiccant in the container (CD), thus causing the flow meter to have a stable radio communication with a high output which is independent on its orientation during operation. This further allows the flow meter to be suited for low-cost mass production.

## Description

### FIELD OF THE INVENTION

The present invention relates to ultrasonic flowmeters for measuring flowrate and other fluid related data, the flowmeters comprising a flow tube and a flowmeter housing containing flowmeter components including a printed circuit board with surface components on one side.

### BACKGROUND OF THE INVENTION

Electronic or steady state flowmeters, such as ultrasonic flowmeters, are increasingly being used as utility meters for measuring water consumption. Compared to traditional mechanical flow meters, an ultrasonic flow meter provides the advantage of having no moving parts. Another advantage is the electronic nature of ultrasonic flow meters. As ultrasonic flow meters include a power source for powering the measurement circuit, often a battery, a radio communication device for external communication may also be integrated. Furthermore, ultrasonic flowmeters often include onboard processing capabilities, making data processing available in the meter.

With an increasing focus on environmental issues, including water scarcity, water metering is on the rise resulting in more metering points on a global scale. Additionally, advancements in sensor technology and data processing have made it possible to gather new types of data and to use that data for new purposes, such as leak detection, water quality assessments, etc., rather than just water consumption.

With an increasing number of metering points, water meter manufacturability becomes an important factor and even minor improvements may have a significant impact on the total cost of a metering infrastructure including tens of thousands of meters. Hence, an improved more compact and manufacturing friendly ultrasonic flow meter would be advantageous.

EP 3 550 272 B1 by Kamstrup describes a compact ultrasonic water meter with an antenna for radio communication.

### OBJECT OF THE INVENTION

It is an object of the present invention to wholly or partly overcome disadvantages and drawbacks of the prior art. More specifically, it is an object to provide a compact and manufacturing friendly ultrasonic flow meter. More specifically, it is an object to provide a compact ultrasonic flow meter which is possible to manufacture in an automated low-cost mass production process, and which has an efficient radio communication performance despite manufacturing variations and tolerances.

### SUMMARY OF THE INVENTION

The invention provides in a first aspect an ultrasonic flow meter for measuring a flow rate of a fluid, comprising:
- a flow tube with a flow passage of the fluid between an inlet and an outlet;
- a flow meter housing associated with the flow tube;
- a printed circuit board arranged in the flow meter housing and including a processor for controlling operations of the flow meter;
- a meter circuit;
- a radio circuit provided on the printed circuit board and configured for generating a radio signal with data indicative of a measured flow rate of the fluid represented therein;
- an insert having a wall and a bottom forming a container for a desiccant, wherein the insert (I) is arranged inside the flow meter housing;
- a front part serving as a lid for the container for the desiccant;
- an antenna element mounted on a peripheral part of the insert, and wherein the antenna element is configured to radiate radio waves in response to the radio signal;
characterized in that
the insert is shaped so that the peripheral part, on which the antenna element is mounted, is positioned at least at a minimum distance to an inner part of a wall of the container for the desiccant, so as to reduce influence of at least one property of the desiccant on an impedance matching between the antenna element and the radio circuit.

Such ultrasonic flow meter is suited for low-cost mass production in an automated manufacturing process, since it can be ensured that the radio communication performance of the flow meter will be high despite various factors causing variations in the manufacturing process and in the normal and expected use of the flow meters.

The invention is based on the inventors' insight that the presence of desiccant, typically a granulate, based desiccant in the meter, for example a meter similar to the one described in EP 3 550 272 B1 by Kamstrup, can be problematic with respect to maintain a high radio communication performance under various conditions. Especially, the inventors have realized that this is the case if some parameters related to the desiccant varies. For example, the inventors have the insight that radio communication efficiency is affected by orientation of the flow meter, and that this effect is caused by the desiccant, which is able to move inside the container, in which the desiccant is positioned. Thus, with one orientation of the meter the desiccant may be positioned rather close to the antenna, while in another orientation, the desiccant may be positioned primarily in another part of the container rather far away from the antenna. This is caused by gravity on the desiccant. This movement of the desiccant has been revealed by the inventors to affect the electric tuning properties of the antenna, thus causing in general the antenna to be mismatched with respect to impedance with the radio circuit to which it is connected. Thus, at the frequency to which the antenna is tuned for maximum radiation efficiency, the radiation performance will be poor compared to the expectations due to impedance mismatch caused by the above phenomenon. An impedance mismatch will result in a loss of radiated power from the antenna.

The inventors have further realized that the type of the specific type of desiccant, the amount of desiccant, as well as the amount of humidity contained in the desiccant affects the impedance matching of the antenna. In some cases, the inventors have provided measurement data showing that as much as 5-6 dB radiated power can be lost.

All of the mentioned parameters can be expected to variation influencing a flow meter manufactured in an automated mass production, and which is installed at a consumer side under various conditions, e.g. orientation of the meter when installed and humidity conditions. The inventors have realized that a potential radio power loss of 5-6 dB is unacceptable, and will lead to non-compliance with radio communication requirements.

The inventors have surprisingly realized that the mentioned radio communication power loss can be eliminated or at least significantly reduced by rather simple means. Namely, by positioning the antenna element on a peripheral part of an insert which, such that the antenna element is positioned at a minimum distance to an inner part of the wall of the container for the desiccant, thereby providing a minimum distance between the volume where the desiccant is located, so as to reduce influence of one or more properties related to the desiccant on an impedance matching between the antenna element and the radio circuit. Hereby, the radio communication efficiency of the flow meter can be ensured to be essentially independent on the desiccant, since the inventors have demonstrated with measurement data that a reasonable minimum distance of such as 4-8 mm is enough to ensure a radiated power loss of less than 1 dB due to impedance mismatch between antenna and radio circuit, under varying desiccant conditions. This can be achieved with simple means, e.g. in the form of one or more spacing elements between antenna element and the desiccant container wall.

Especially, the inventors have demonstrated, based on the water meter with an insert shown in EP 3 550 272 B1 by Kamstrup, that rather simple design changes regarding the insert and the antenna element mounted thereon have resulted in a water meter which is significantly less influenced by conditions regarding the desiccant located in the insert.

It is to be understood that the exact distance between wall of the container and the antenna element to provide impedance matching will depend on the exact design of the antenna, the exact location of the antenna, the shape of the contained and various other elements. However, the inventors have realized that even with a reasonable distance of only a few mm, impedance mismatch can be reduced to an acceptable level of below 1 dB for many of the above-mentioned variations.

By 'impedance matching' between antenna element and radio circuit is understood that impedance of radio circuit and impedance antenna element match within reasonable tolerances. Thus, at a specific frequency where the impedance is designed to match for maximum efficiency, impedance matching is understood to be fulfilled if a radiation power loss is less than a given value due to impedance mismatch, e.g. a radiation power loss of 0.4 dB, e.g. 1 dB, e.g. 1.25 dB.

In the following preferred features and embodiments will be described.

The insert may have a one or more spacing elements, such as one or more ribs, extending from the wall of the container for the desiccant, such as extending at least 2 mm, such as 2-10 mm, such as 3-6 mm, from the wall of the container for the desiccant, and wherein the antenna element is fixed to a peripheral part of the one or more spacing elements. Hereby, a sufficient distance between desiccant and antenna element has been demonstrated by measurements to provide a high immunity against impedance mismatch between antenna element and radio circuit. Especially, one or more spacing elements may comprise at least two ribs being perpendicular to a plane formed by a bottom of the container for desiccant. Hereby, a sufficient distance can be provided with a minimum of extra material for the insert, and still provide a sufficiently rigid mounting base for the antenna element.

In one embodiment, at least a part of the antenna element is mounted on a surface of a peripheral wall of the insert, e.g. an extra wall placed with a minimum distance to the wall of the desiccant container. In this way, e.g. with a curved wall forming a peripheral part of the insert, the antenna element can be mounted tight to the surface of such wall.

The antenna element preferably has a connector end with a connecting element for electric connection to the radio circuit and a distal end, and wherein at least a part of the antenna element between the connector end and the distal end is attached to the peripheral part of the insert.

Preferably, the antenna element provides an impedance matching with the radio circuit, independent of at least one property, such as 2-4 properties, related to the desiccant selected from: 1) desiccant material type, 2) position or distribution of the desiccant inside the container for desiccant, 3) humidity level of the desiccant, 4) granulate size of the desiccant, and 5) volume of the container for desiccant occupied by the desiccant. Especially, it is preferred that the antenna element provides an impedance matching with the radio circuit independent of all of: 1) desiccant material type, 2) position or distribution of the desiccant inside the container for desiccant, 3) humidity level of the desiccant, 4) granulate size of the desiccant, and 5) volume of the container for desiccant occupied by the desiccant.

Preferably, the antenna element provides an impedance matching with the radio circuit, so that a loss of efficiency due to impedance mismatch is less than 1.25 dB, such as less than 1.0 dB, such as less than 0.5 dB, such as less than 0.4 dB, independent of the at least one property of the desiccant in the container for desiccant, more preferably independent of all properties related to the desiccant in the container for desiccant.

The insert may be shaped so that the peripheral part on which the antenna element is mounted, is positioned at a minimum distance to the inner part of the wall of the container for the desiccant, so that the antenna element provides an impedance matching with the radio circuit independent of an orientation of the flow meter.

The insert and the front part preferably have a through-going opening arranged to accommodate a display, and wherein the through-going opening is displaced towards one side of the insert, and wherein the peripheral part of the insert with the antenna element is arranged at an opposite side of the insert. Hereby, it can be ensured that the metal parts of the display only have a minimal influence on the antenna element, and therefore also only a minimal influence on impedance matching between antenna element and radio circuit. Especially, the display may have a plurality of electric pins electrically connected to the printed circuit board, wherein these electric pins are displaced towards one end of the display, facing away from the peripheral part of the insert with the antenna element, so as to minimize the influence of the electric pins of the display on the impedance matching between the antenna element and the radio circuit.

Preferred embodiments comprise at least one metallic element, such as a metallic spring element, arranged on the insert and serving to provide a force for fixing the printed circuit board to the flow meter housing, and wherein said metallic element has at least one set of claws for gripping onto a protrusion of the flow meter housing, so as to fix position of the insert in relation to the flow meter housing, after the insert has been forced towards a bottom of the flow meter housing. Especially, it is preferred, that the antenna element is arranged on a peripheral part of the insert facing away from the at least one metallic element, so as to minimize an influence on the impedance matching between the antenna element and the radio circuit. The reason for this is that it has been found that these spring elements may influence antenna performance, and especially introduce a variation element which can vary due to production tolerances, and thus contribute to impedance mismatch of the antenna element.

The insert is preferably a monolithic element of an electrically non-conductive material, such as a polymeric material.

The antenna element is preferably made of an electrically conductive material, such as a metal, wherein the antenna element has a connector end with a connecting element for electric connection to the radio circuit and a distal end. Preferably, the antenna element has a connecting element for electric connection to the radio circuit and an elongate portion arranged along the peripheral part of the insert. Preferably, the elongate portion of the antenna element extends in the range of 10-40%, such as 15-25%, of a total periphery of the insert.

In a preferred embodiment, the flow meter housing is integrated with the flow tube, such as the flow meter housing forming a monolithic unit together with the flow tube.

The flow meter preferably comprises two or more ultrasonic transducers provided on the printed circuit board and connected to the meter circuit, wherein the meter circuit is configured for operating the ultrasonic transducers to transmit and receive ultrasonic signals through the fluid in the flow tube.

Furthermore, in embodiments with two or more ultrasonic transducers, these transducers may be mounted on islands provided in the printed circuit board being connected with the remaining printed circuit board via tongues of the printed circuit board containing copper traces for electrically connecting the ultrasonic transducers to the remaining meter circuit. Such design provides a certain resilience to the design and allows limited transducer displacement towards the flow tube.

The insert is preferably a monolithic polymeric element.

The front part may be configured for snap or click locking onto the insert, so as to form a single element including a desiccant in the container for desiccant.

The insert is preferably configured to provide a force for fixing the printed circuit board to the flow meter housing.

The antenna element is preferably releasably electrically coupled to the radio circuit via one or more connecting elements.

The antenna element may especially be configured as a monopole antenna.

Preferably, the antenna element is arranged between the wall of the container for the desiccant and an inner wall of the flow meter housing, when the flow meter is in an assembled state.

The desiccant may be a granulate, such as silica gel or bentonite clay.

The radio circuit is configured to generate a radio signal with predetermined radio signal properties, such as one or more carrier frequencies. Especially, the radio circuit may be configured to generate a radio signal with at least one carrier frequency, such as being configured to generate a radio signal with at least two carrier frequencies, such as at being configured to generate a radio signal with a carrier frequency within 850-950 MHz, such as within 865-928 MHz. The radio circuit may alternatively or additionally be configured to generate a radio signal in at least one carrier frequency band selected from: 450 MHz, 700 MHz, 800 MHz, 1700 MHz, 1800 MHz, 1900 MHz, 2100 MHz, and 2600 MHz.

The meter circuit is preferably implemented on the circuit board.

The radio circuit may comprise an impedance matching network, preferably this impedance matching network is tuned to provide an impedance matching with the antenna element at one or more carrier frequencies.

The flow meter preferably comprises a lid serving to close off the flow meter housing.

Additionally, the ultrasonic flowmeter may be a utility meter for metering water consumption or a utility meter for metering fluid flow in a heat or cooling meter installation. The ultrasonic flowmeter described above may also additionally include a temperature probe for measuring the temperature of a fluid flowing through the flow tube.

Moreover, the ultrasonic flowmeter may be configured to include registers for storing meter data, such as flow-, volume- and/or consumption data. The ultrasonic flowmeter may also store other meter data, such as event- or performance data related to the operation of the meter or data related to other sensors (internal or external) connected to the meter.

In a second aspect, the invention provides use of an insert shaped to provide at least a minimum distance between to an inner part of a wall of a container for a desiccant and peripheral part of the insert on which an antenna element is mounted for reducing influence on an impedance matching between the antenna element and a radio circuit to which the antenna element is connected, of at least one property of a desiccant in the container for desiccant.

In a third aspect, the invention provides a method of manufacturing the flow meter according to the first aspect, at least partly in an automated process, such as an automated process performed by a robotic production line, the method comprises
- providing a first element comprising the flow tube and the flow meter housing;
- providing a second element comprising the printed circuit board with the radio circuit and the meter circuit implemented thereon;
- providing a third element comprising the insert with a desiccant in the container and the antenna element and with the front part mounted to close the container for the desiccant, and wherein the antenna element is attached to the peripheral part of the insert;
- providing a fourth element comprising a lid;
- arranging the second element into the flow meter housing of the first element;
- forcing the third element into engagement with a part of the flow meter housing of the first element so as to fix position of the second and third elements relative to the first element; and
- mounting the fourth element to close off the flow meter housing of the first element.

Especially, after the steps of manufacturing the first, second, third and four elements, the three subsequently mentioned assembly steps are preferably handled automatically by a robotic assembly line without any manual handling. In this way an effective manufacturing process can be provided, which allows mass production manufacturing of a low-cost ultrasonic flow meter with a high radio communication efficiency despite manufacturing variations and tolerances.

The above-described embodiments may each be combined with any of the other embodiments. These and other embodiments will be apparent from and elucidated with reference to the embodiments described hereinafter.

### BRIEF DESCRIPTION OF THE FIGURES

The compact ultrasonic flowmeter according to the invention will now be described in more detail regarding the accompanying figures. The figures show one way of implementing the present invention and is not to be construed as being limiting to other possible embodiments falling within the scope of the attached claim set.
FIG. 1a and 1b show two different views of an insert embodiment,
FIG. 1c shows the insert embodiment of FIG. 1a and 1b covered with a front part,
FIG. 2 shows an exploded 3D view of a preferred flow meter embodiment,
FIG. 3 shows the flow meter embodiment of FIG. 2 in an assembled state,
FIG. 4a-4d show measurement of antenna impedance matching to a specific frequency at three different orientations of the flow meter, with each figure showing measurement results for different amount of desiccant in the insert of the flow meter,
FIG. 5 shows measurement results antenna impedance matching to a specific frequency at three different orientations of the flow meter embodiment with the antenna element spaced according to the embodiments of FIG. 1-3, and
FIG. 6 shows steps of a method of manufacturing method.

### DETAILED DESCRIPTION

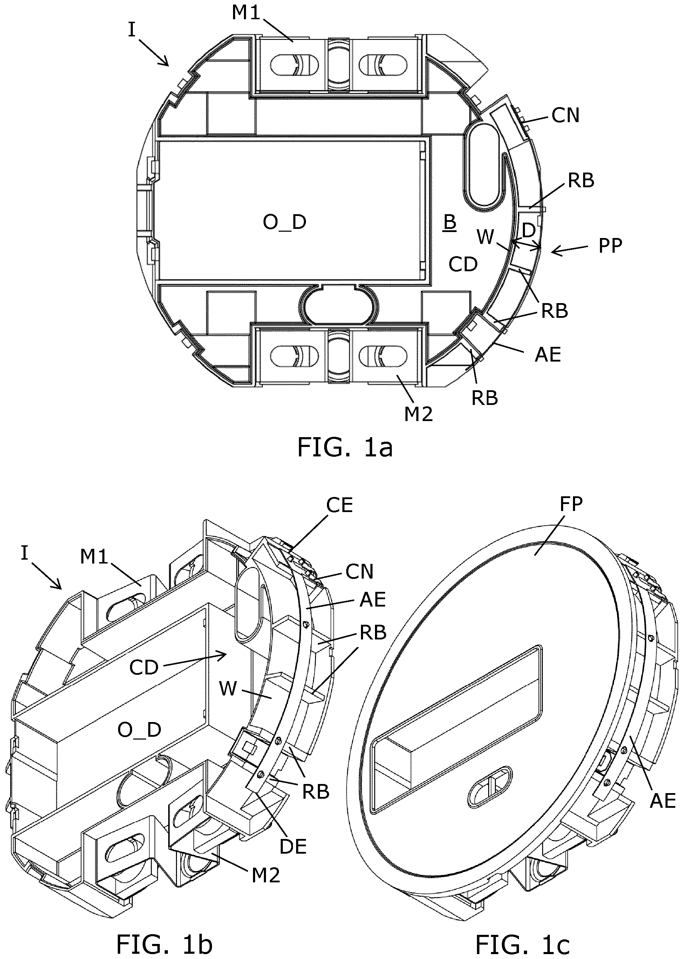

FIG. 1a, 1b, and 1c illustrates a preferred insert I embodiment for forming part of an ultrasonic flow meter, e.g. a water meter, which is suited for a highly automated mass production.

The insert I has a wall W and a bottom B forming a container CD, in which a desiccant (not shown) can be placed. The insert I has a through-going opening O_D for a display, and two metallic spring elements M1, M2 with claws are mounted to allow the insert I to be mounted with the claws fixing the element to protrusions in a housing of the flow meter, upon the inset being forced towards the bottom of the flow meter housing. Apart from the metallic elements M1, M2, the insert may be a monolithic element cast in a polymeric material.

The insert I has ribs RB perpendicular to a plane formed by a bottom B of the container CD for desiccant and extending outside from a wall W of the container CD for the desiccant. An antenna element AE is mounted onto some of the ribs RB, and this antenna element AE is configured to radiate radio waves in response to a radio signal from a radio circuit which can be electrically connected with the connecting elements CN of a connecting end CE of the antenna element AE.

The ribs RB are dimensioned so that they provide at least a minimum distance D to an inner part of a wall W of the container CD for the desiccant to the antenna element AS, in a preferred embodiment a distance D of such as 4-6 mm. This distance D has been found enough to reduce influence of the desiccant on an impedance matching between the antenna element AE and the radio circuit, such that a radiated power loss due to impedance mismatch can be kept below at least 1.25 dB and even lower, and this has been found to be an acceptable limit. Hereby, it can be ensured at least that the radio efficiency is not significantly influenced by orientation of the flow meter due to the desiccant which can move inside the container CD.

In general, various parameters of the desiccant in the container CD will create various electric load conditions for the antenna element AE, thus causing the antenna element AE to vary its impedance or tuning frequency, e.g. the resonance to which it is tuned. With the distance D of 4-6 mm caused by the ribs RB, the influence of the desiccant has been found to be negligible on the performance of the antenna AE.

FIG. 1c shows a front part FP which serves as a lid for the container CD for the desiccant. This front part FP has a display opening aligned with the corresponding opening O_D of the insert I.

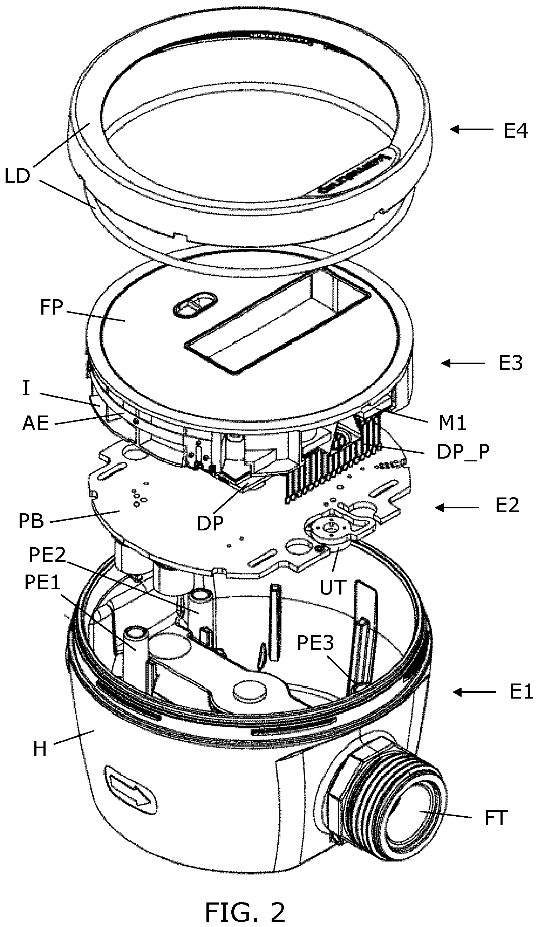

FIG. 2 shows an exploded view of a flow meter embodiment, e.g. a water meter, and with the insert I as shown in FIG. 1a, 1b and 1c. The flow meter has a flow tube FT with a flow bore for passage of fluid, e.g. water, between an inlet and an outlet. A flow meter housing H is formed as an integrated part PT1 of the flow tube FT thereby providing a compartment for meter components arranged at the flow tube FT to measure the flow rate of a fluid flowing in the flow bore. The flow meter housing H and flow tube FT may be formed by a polymer material. From the bottom of the housing H, four protruding elements, here only three PE1, PE2, PE3 are visible, serve for engagement with claws of the metallic elements (the elements M1, M2 of Fig. 1a, 1b) so as to fix position of the insert I, when forced towards the bottom of the housing.

Inside the flow meter housing H a printed circuit board PB is arranged. This circuit board PB includes a processor and meter circuit for controlling operations of the flow meter. The circuit board PB further includes two ultrasonic transducers, of which one UT, is visible mounted on a lower side of the circuit board PB.

A lower side of the ultrasonic transducers UT opposite an upper side connected to the PCB, is arranged against an outer surface of the flow tube FT, inside the housing H. The meter circuit is configured for operating the ultrasonic transducers to transmit and receive ultrasonic wave packets through the flow tube and a fluid present in the flow bore.

On an upper side of the circuit board PB a display DP is mounted. The display DP is configured for displaying a measured flow rate and other fluid related data. As seen, the display is positioned to an opposite side of where the antenna element AE is positioned, and the electric pins DP_P of the display DP are asymmetrically placed on the display DP, such that these electric pins DP_P are positioned as far as possible away from the antenna element AE. Thereby, the influence of the display D and its electric pints DP_P on the antenna performance is minimized.

The flow meter further includes a battery pack for powering flow meter operations including the processor, the meter circuit and the display. The battery pack is preferably mounted directly on the circuit board PB.

The flow meter further includes a radio circuit mounted on the circuit board PB. Via the radio circuit, the communication device is releasably electrically coupled to the antenna element AE on the insert I.

The radio circuit and antenna element AE are preferably suited for automated meter reading (AMR) advanced meter infrastructure (AMI) systems are commonly known for communicating with utility meters. In an AMI a communication path is established between the utility meter and the HES via a number of intermediate network devices such as data collectors, repeaters, routers gateways etc. The utility meters may deliver any data obtained by the meter or external sensors connected to it to the HES, however the capacity of the AMI and the battery capacity of the utility meters M will limit the amount of data that can be transmitted. The AMI may use any suitable technology for carrying data from the utility meter to the HES over one or more local area networks or wide area networks including connections to the open internet. The AMI may use any suitable wireless technology (e.g. wireless M-Bus, Narrowband IoT, SigFox, any cellular technologies or proprietary communication protocols) or any wired communication technologies (e.g. wired M-Bus, LON, Ethernet).

As explained, the circuit board PB has a number of components on it and provides a part PT2 in a manufacturing process of the flow meter.

The insert I, as already explained, forms together with the matching front part FP a part PT3 to be mounted in a manufacturing process.

A final part PT4 in a manufacturing process if formed by the lid LD which serves to close off the housing H. The lid LD may include a sealing ring and a transparent cover, as well as a sealing ring for hermetically sealing the sealing ring and cover to an upper rim of the housing H.

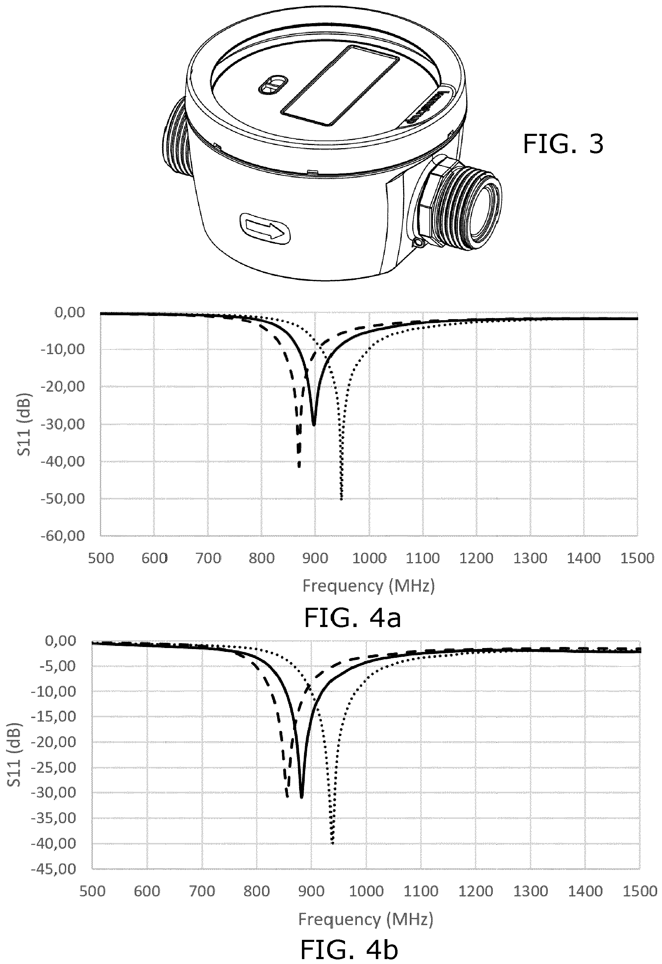

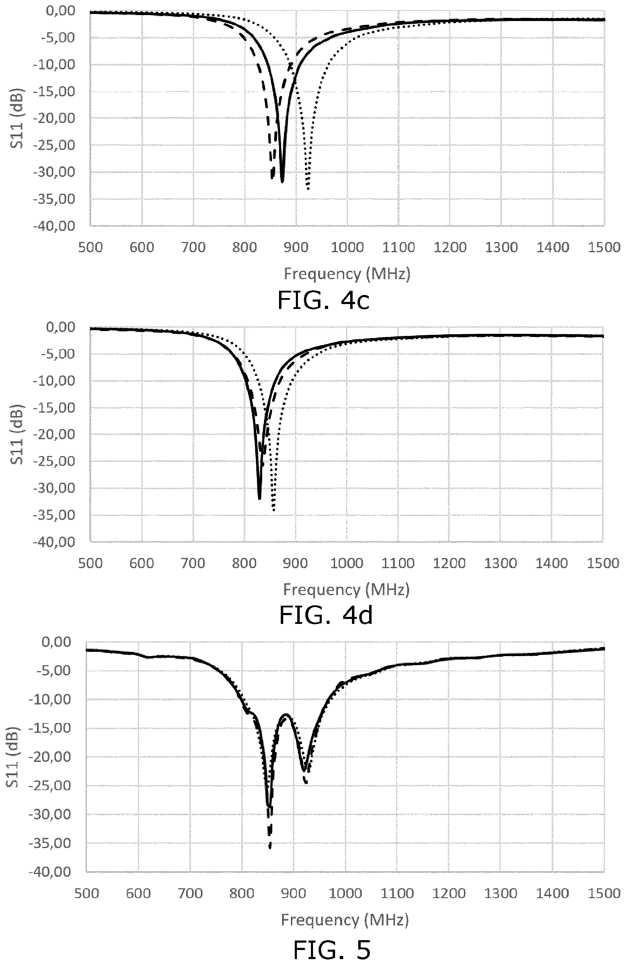

FIG. 4a-4d show measurement data for antenna impedance matching, indicated in dB, to a specific frequency at three different orientations of a prior art flow meter, basically similar to the one shown in EP 3 550 272 B1 by Kamstrup. Each of FIG. 4a-4d show measurement data for a specific amount of desiccant in the container of the insert. FIG. 4a shows data for 6.4 g of desiccant, FIG. 4b shows data for 9.4 g of desiccant, FIG. 4c shows data for 12.4 g of desiccant, and FIG. 4c shows data for 17.6 g of desiccant (which corresponds to a full desiccant container in the insert).

The three orientations indicated with different line types are: 1) when the flow meter is flat on the table (0°) which is shown with solid line, 2) when the flow meter is rotated so that the antenna side looks down (-90°) meaning that all desiccant will move towards the antenna area - this is shown with dashed line, and 3) when the flow meter is oriented with the antenna side facing upwards (+90°), meaning that the desiccant will move away from the antenna area - this is shown with dotted line.

What is basically seen is, that the tuning frequency of the prior art insert and antenna element varies significantly with orientation, such as from 850-950 MHz with only a little amount of desiccant, and slightly less with more desiccant in the container. The result of this is that the impedance of the antenna at a given operating carrier frequency with vary significantly, thereby with some orientations of the flow meter, a significant loss of radiated power can be observed.

FIG. 5 shows corresponding results for the three different above-mentioned orientations 1)-3) for the insert and the antenna element embodiments of FIG. 1-3, i.e. with spacing of about 4-6 mm between the desiccant and the antenna element, and with about 10 g of desiccant in the container. Even though it can be seen that this antenna is tuned to two different carrier frequencies in contrast to the prior art flow meter data shown in FIG. 4a-4c, it is clearly seen that the tuning frequencies are essentially independent of the orientation of the flow meter.

This means that, even though the desiccant container is not full, the influence of the position of the desiccant in the container is negligible for the antenna performance. Therefore, the impedance matching with the radio circuit is independent of the desiccant in the container, and thus a high radio power efficiency can be achieved in all operating orientations of the flow meter.

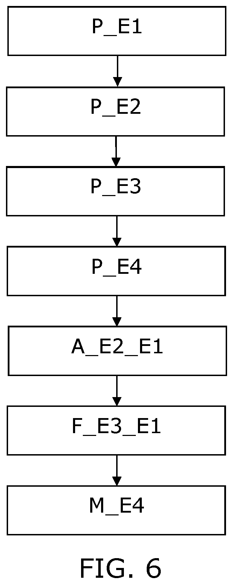

FIG. 6 shows steps of a method of manufacturing a flow meter with components as described above. The method comprises manufacturing four parts or element, namely 1) providing P_E1 a first element comprising the flow tube and the flow meter housing, 2) providing P_E2 a second element comprising the printed circuit board with the radio circuit and the meter circuit implemented thereon, 3) providing P_E3 a third element comprising the insert with a desiccant in the container and the antenna element and with the front part mounted to close the container for the desiccant, and wherein the antenna element is attached to the peripheral part of the insert, and 4) providing P_E4 a fourth element comprising the lid.

Next, in a semi-automated of fully automated assembly process: arranging A_E2_E1 the second element into the flow meter housing of the first element, forcing F_E3_E1 the third element into engagement with a part of the flow meter housing of the first element so as to fix position of the second and third elements relative to the first element; and finally mounting M_E4 the fourth element to close off the flow meter housing of the first element.

This can be done in a fast assembly process involving a robotic production line, even without any manual involvement.

To sum up, the invention provides an ultrasonic flow meter for measuring a flow rate of a fluid. The flow meter has a flow tube (FT), and a flow meter housing (H) associated with the flow tube (FT). A printed circuit board (PB) is arranged in the housing (H) and including a processor for controlling operations of the flow meter, a meter circuit, and a radio circuit for generating a radio signal with data indicative of a measured flow rate of the fluid. A lid (LD) may serve to close off the housing (H). An insert (I) in the housing(H) has a wall (W) and a bottom (B) forming a container (CD) for a desiccant. A front part (FP) serves as a lid for the container (CD) for the desiccant. An antenna element (AE) is mounted on a peripheral part (PP) of the insert (I) and being configured to radiate radio waves in response to the radio signal. The insert (I) has spacing elements (RB) on which the antenna element (AE) is mounted so that at least a minimum distance (D) to an inner part of a wall (W) of the container (CD) for the desiccant is provided, so as to reduce influence of at least one property of the desiccant on an impedance matching between the antenna element (AE) and the radio circuit. Hereby, with a distance (D) of such as 4-6 mm, it has been found to cause antenna performance to be generally independent of the desiccant, e.g. the position of the desiccant in the container (CD), thus causing the flow meter to have a stable radio communication with a high output which is independent on its orientation during operation. This further allows the flow meter to be suited for low-cost mass production.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is not possible and advantageous.

## Claims

1. An ultrasonic flow meter for measuring a flow rate of a fluid, comprising:
- a flow tube (FT) with a flow passage of the fluid between an inlet and an outlet;
- a flow meter housing (H) associated with the flow tube (FT);
- a printed circuit board (PB) arranged in the flow meter housing (H) and including a processor for controlling operations of the flow meter;
- a meter circuit;
- a radio circuit provided on the printed circuit board (PB) and configured for generating a radio signal with data indicative of a measured flow rate of the fluid represented therein;
- an insert (I) having a wall (W) and a bottom (B) forming a container (CD) for a desiccant, wherein the insert (I) is arranged inside the flow meter housing (H);
- a front part (FP) serving as a lid for the container (CD) for the desiccant;
- an antenna element (AE) mounted on a peripheral part (PP) of the insert (I), and wherein the antenna element (AE) is configured to radiate radio waves in response to the radio signal;
**characterized in that**
the insert (I) is shaped so that the peripheral part (PP, RB), on which the antenna element (AE) is mounted, is positioned at least at a minimum distance (D) to an inner part of a wall (W) of the container (CD) for the desiccant, so as to reduce influence of at least one property of the desiccant on an impedance matching between the antenna element (AE) and the radio circuit.

2. The flow meter according to claim 1, wherein the insert (I) has a one or more spacing elements (RB), such as one or more ribs (RB), extending from the wall (W) of the container (CD) for the desiccant, such as extending at least 2 mm, such as 2-10 mm, from the wall (W) of the container (CD) for the desiccant, and wherein the antenna element (AE) is fixed to a peripheral part of the one or more spacing elements (RB).

3. The flow meter according to claim 2, wherein said one or more spacing elements (RB) comprises at least two ribs (RB) being perpendicular to a plane formed by a bottom (B) of the container (CD) for desiccant.

4. The flow meter according to any of the preceding claims, wherein at least a part of the antenna element (AE) is mounted on a surface of a peripheral wall of the insert (I).

5. The flow meter according to any of the preceding claims, wherein the antenna element (AE) has a connector end (CE) with a connecting element (CN) for electric connection to the radio circuit and a distal end (DE), and wherein at least a part of the antenna element (AE) between the connector end (CE) and the distal end (DE) is attached to the peripheral part (PP, RB) of the insert (I).

6. The flow meter according to any of the preceding claims, wherein the antenna element (AE) provides an impedance matching with the radio circuit, independent of at least one property related to the desiccant selected from: 1) desiccant material type, 2) position or distribution of the desiccant inside the container (CD) for desiccant, 3) humidity level of the desiccant, 4) granulate size of the desiccant, and 5) volume of the container (CD) for desiccant occupied by the desiccant.

7. The flow meter according to claim 6, wherein any of the preceding claims, wherein the antenna element (AE) provides an impedance matching with the radio circuit independent of all of: 1) desiccant material type, 2) position or distribution of the desiccant inside the container (CD) for desiccant, 3) humidity level of the desiccant, 4) granulate size of the desiccant, and 5) volume of the container (CD) for desiccant occupied by the desiccant.

8. The flow meter according to any of the preceding claims, wherein the antenna element (AE) provides an impedance matching with the radio circuit, so that a loss of efficiency due to impedance mismatch is less than 1.25 dB, such as less than 1.0 dB, such as less than 0.5 dB, such as less than 0.4 dB, independent of the at least one property of the desiccant in the container (CD) for desiccant.

9. The flow meter according to any of the preceding claims, wherein the insert (I) is shaped so that the peripheral part (PP, RB) on which the antenna element (AE) is mounted, is positioned at a minimum distance (D) to the inner part of the wall (W) of the container (CD) for the desiccant, so that the antenna element (AE) provides an impedance matching with the radio circuit independent of an orientation of the flow meter.

10. The flow meter according to any of the preceding claims, wherein the insert (I) and the front part (FP) have a through-going opening arranged to accommodate a display, and wherein the through-going opening is displaced towards one side of the insert (I), and wherein the peripheral part (PP) of the insert (I) with the antenna element (AE) is arranged at an opposite side of the insert (I).

11. The flow meter according to claim 10, comprising a display (DP) with a plurality of electric pins (DP_P) electrically connected to the printed circuit board (PB), wherein the electric pins (DP_P) are displaced towards one end of the display (DP) facing away from the peripheral part (PP, RB) of the insert (I) with the antenna element (AE), so as to minimize influence of the electric pins (DP_P) of the display (DP) on the impedance matching between the antenna element (AE) and the radio circuit.

12. The flow meter according to any of the preceding claims, comprising at least one metallic element (M1, M2), such as a metallic spring element, arranged on the insert (I) and serving to provide a force for fixing the printed circuit board (PB) to the flow meter housing (H), and wherein said metallic element (M1, M2) has at least one set of claws for gripping onto a protrusion (PE1, PE2, PE3) of the flow meter housing (H), so as to fix position of the insert (I) in relation to the flow meter housing (H), after the insert (I) has been forced towards a bottom of the flow meter housing (H).

13. The flow meter according to claim 12, wherein the antenna element (AE) is arranged on a peripheral part of the insert (I) facing away from the at least one metallic element, so as to minimize an influence on the impedance matching between the antenna element (AE) and the radio circuit.

14. Use of an insert (I) shaped to provide at least a minimum distance (D) between to an inner part of a wall (W) of a container (CD) for a desiccant and peripheral part (PP, RB) of the insert (I) on which an antenna element (AE) is mounted for reducing influence on an impedance matching between the antenna element (AE) and a radio circuit to which the antenna element (AE) is connected, of at least one property of a desiccant in the container (CD) for desiccant.

15. A method of manufacturing the flow meter according to any of claims 1-13 in an automated process, the method comprises
- providing (P_E1) a first element comprising the flow tube and the flow meter housing;
- providing (P_E2) a second element comprising the printed circuit board with the radio circuit and the meter circuit implemented thereon;
- providing (P_E3) a third element comprising the insert with a desiccant in the container and the antenna element and with the front part mounted to close the container for the desiccant, and wherein the antenna element is attached to the peripheral part of the insert;
- providing (P_E4) a fourth element comprising a lid;
- arranging (A_E2_E1) the second element into the flow meter housing of the first element;
- forcing (F_E3_E1) the third element into engagement with a part of the flow meter housing of the first element so as to fix position of the second and third elements relative to the first element; and
- mounting (M_E4) the fourth element to close off the flow meter housing of the first element.
